# EUROPEAN PATENT APPLICATION

(11) **EP 4 756 690 A1**
(43) Date of publication of application: **10.06.2026**
(21) Application number: 25215868.8
(22) Date of filing: 14.11.2025
(51) Int. Cl.: G06Q 10/101, G06N 20/00, A01B 79/00, G06Q 50/02

(54) **SYSTEM AND METHOD FOR SUPPORTING DECISION-MAKING IN AN ENVIRONMENT WHERE MULTIPLE USERS COLLABORATE TO MANAGE CULTIVATION**

(30) Priority: 04.12.2024 KR 20240178023; 13.01.2025 KR 20250004860
(71) Applicant: Korea Institute of Science and Technology, Seoul (KR)
(72) Inventor: KIM, Hyoung Seok, Gangneung-si (KR); LEE, Taek Sung, Gangneung-si (KR); PARK, Soo Hyun, Gangneung-si (KR); PARK, JaeKun, Gangneung-si (KR); CHOI, Hong-Beom, Gangneung-si (KR); KIM, Sihong, Gangneung-si (KR); SHIN, YunHee, Gangneung-si (KR)
(74) Representative: Walaski, Jan Filip

(57) **Abstract**

According to an embodiment, a system for supporting decision-making in an environment where multiple users collaborate to manage cultivation is provided. The system comprises a data collection and management module configured to collect and store, in real time, comment and voting data generated by users; a multi-domain analysis and interaction modeling module configured to analyze the correlated data, derive pattern data from similar situations, and statistically analyze correlations among situations, impacts, and responses; and a user collaboration interface module supporting real-time communication and sharing of analysis results and recommendations. The system further comprises a comment processing and learning module configured to structure comments using natural language processing, a decision support and recommendation generation module configured to produce recommendation data, and a learning and feedback management module configured to generate feedback loop data based on artificial intelligence learning. The system enables improved decision-making quality and operational efficiency in smart farm (greenhouse) management.

## Description

### BACKGROUND

### 1. Field

The present disclosure relates to smart farming (greenhouse operation), and more particularly, to a system and method for supporting decision-making in an environment where multiple users collaborate to manage cultivation.

### 2. Description of the Related Art

Most smart farm (greenhouse) decision-making systems have been designed primarily for single-user operation, merely providing analysis results to the user. Such systems have limited functionality for enabling multiple users to collaborate or communicate in real time and face inherent constraints in generating specific recommendations and resolving conflicting conditions.

Furthermore, these systems lack the ability to improve decision-making by incorporating user feedback, thereby failing to effectively address the complex challenges of smart farm (greenhouse) operations. Accordingly, there is a need for an improved system and method that allow multiple users to collaborate and communicate in real time, provide concrete recommendations, and reflect feedback.

### SUMMARY

Aspects of the present disclosure provide a system and method for supporting decision-making in an environment where multiple users collaborate to manage cultivation.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to an embodiment of the present disclosure, a system for supporting decision-making in an environment where multiple users collaborate to manage cultivation may comprise, a data collection and management module configured to collect, in real time, comment data and voting data generated by users, refine and store the collected data, a multi-domain analysis and interaction modeling module configured to correlate and analyze the comment data and the voting data, derive pattern data in similar situations involving multiple users, and statistically analyze correlations among a specific situation, its impact, and corresponding responses, a user collaboration interface module configured to support real-time collaboration and communication among users and to share analysis results and recommendations, a comment processing and learning module configured to preprocess the comment data, structure the data through natural language processing and semantic analysis, and transform the data into a learnable format, a decision support and recommendation generation module configured to generate decision support data and recommendation data based on the analysis results and structured data, and a learning and feedback management module configured to learn the analysis results, the structured data, the decision support data, and the recommendation data, generate feedback loop data based on the learning results, and provide the feedback loop data to the multi-domain analysis and interaction modeling module.

In one example, the multi-domain analysis and interaction modeling module may include an interaction model, and may be characterized in that correlations are statistically analyzed based on the interaction model, and the interaction model is updated by integrating the derived pattern data and analyzed correlation data into the interaction model.

In another example, the comment processing and learning module may be characterized in that the comment data is structured by classifying the data into the categories of "Situation (S), Impact (I), and Response (R)".

In another example, the learning and feedback management module may be characterized in that the learning is performed based on an artificial intelligence learning model.

According to another embodiment of the present disclosure, a method for supporting decision-making in an environment where multiple users collaborate to manage cultivation may comprise the steps of: collecting, in real time, comment data and voting data generated by users and refining and storing the collected data, by the data collection and management module, correlating and analyzing the comment data and the voting data, deriving pattern data in similar situations involving multiple users, and statistically analyzing correlations among a specific situation, its impact, and corresponding responses, by the multi-domain analysis and interaction modeling module, supporting real-time collaboration and communication among users and sharing analysis results and recommendations, by the user collaboration interface module, preprocessing the comment data, structuring the data through natural language processing and semantic analysis, and transforming the data into a learnable format, by the comment processing and learning module, generating decision support data and recommendation data based on the analysis results and the structured data, by the decision support and recommendation generation module, and learning the analysis results, the structured data, the decision support data, and the recommendation data, and generating feedback loop data based on the learning results, by the learning and feedback management module.

### BRIEF DESCRIPTION OF THE DRAWINGS

The above and other objects and features of the present disclosure will become apparent by describing in detail exemplary embodiments thereof with reference to the attached drawings, in which:
FIG. 1 illustrates a system for supporting decision-making in an environment where multiple users collaborate to manage cultivation, according to an embodiment of the present disclosure.
FIG. 2 illustrates an apparatus according to an embodiment of the present disclosure.
FIG. 3 illustrates a method for supporting decision-making in an environment where multiple users collaborate to manage cultivation.

### DETAILED DESCRIPTION

Hereinafter, embodiments of the present disclosure will be described clearly and in detail so that a person having ordinary skill in the art may easily carry out the disclosure.

The terms such as "unit" or "module" used herein, and functional blocks illustrated in the drawings, may be implemented in the form of software configurations, hardware configurations, or combinations thereof. For clarity, repeated descriptions of the same elements will be omitted.

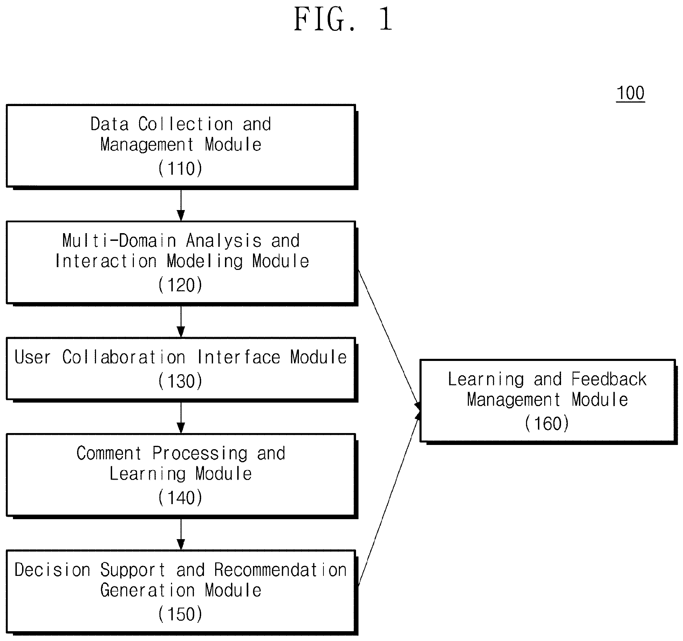

FIG. 1 illustrates a system for supporting decision-making in an environment where multiple users collaborate to manage cultivation, according to an embodiment of the present disclosure.

A data collection and management module 110 may collect, in real time, comment data and voting data generated by users, and may refine and store the collected data. For example, the comment data may include comments written by users regarding analysis results or recommendations, and the voting data may include data indicating whether users voted in favor of or against a given recommendation. In one example, refining the data may comprise correcting unnecessary expressions or typographical errors contained in the collected comments.

A multi-domain analysis and interaction modeling module 120 may correlate and analyze the comment data and the voting data, derive pattern data in similar situations involving multiple users, and statistically analyze correlations among a specific situation, its impact, and corresponding responses. In one example, the multi-domain analysis and interaction modeling module 120 may include an interaction model. The module may statistically analyze correlations based on the interaction model and update the interaction model by integrating the derived pattern data and analyzed correlation data into the interaction model.

For example, the multi-domain analysis and interaction modeling module 120 may perform analysis by correlating comments with the corresponding voting results. In this way, user opinions and preferences may be comprehensively identified and reflected in the decision-making process. In addition, patterns may be identified in which multiple users, in similar situations, refer to the same impacts or propose similar responses. Through this pattern derivation process, problems and solutions that recur may be systematically analyzed.

Furthermore, the multi-domain analysis and interaction modeling module 120 may statistically analyze correlations among specific situations, impacts, and responses in order to evaluate reliability. As a result, more precise and reliable data may be provided for decision-making, thereby maximizing the efficiency of smart farm (greenhouse) operations.

A user collaboration interface module 130 may support real-time collaboration and communication among users and may share analysis results and recommendations.

A comment processing and learning module 140 may preprocess comment data, structure the data through natural language processing and semantic analysis, and convert the data into a learnable format. In one example, the comment processing and learning module 140 may structure the comment data by classifying it into a "Situation (S), Impact (I), and Response (R)" structure (hereinafter "SIR structuring"). For example, the comment "Since high humidity may cause pest infestation, ventilation should be strengthened" may be structured as follows: 'Situation: increase in humidity', 'Impact: risk of pest infestation', 'Response: strengthen ventilation'. Through such SIR structuring, the meaning of comments may be systematically organized, thereby providing useful information for decision-making.

For example, based on the preprocessed comments, the comment processing and learning module 140 may extract key words, meanings, and intentions by applying natural language processing (NLP) techniques. This enables identification of core information from the comments and transformation of the data into a form suitable for analysis.

A decision support and recommendation generation module 150 may generate decision support data and recommendation data based on the analysis results and the structured data.

A learning and feedback management module 160 may learn the analysis results, the structured data, the decision support data, and the recommendation data. The learning and feedback management module 160 may learn based on an artificial intelligence learning model. In one example, the learning and feedback management module 160 may generate feedback loop data based on the learning results and may provide the feedback loop data to the multi-domain analysis and interaction modeling module 120.

In one example, the learning and feedback management module 160 may retrain the interaction model using machine learning algorithms based on updated data. Furthermore, the learning and feedback management module 160 may add new variables and interaction factors to the interaction model to continuously improve the scope and accuracy of the analysis. Through such refinement, the system may generate more precise and reliable recommendations.

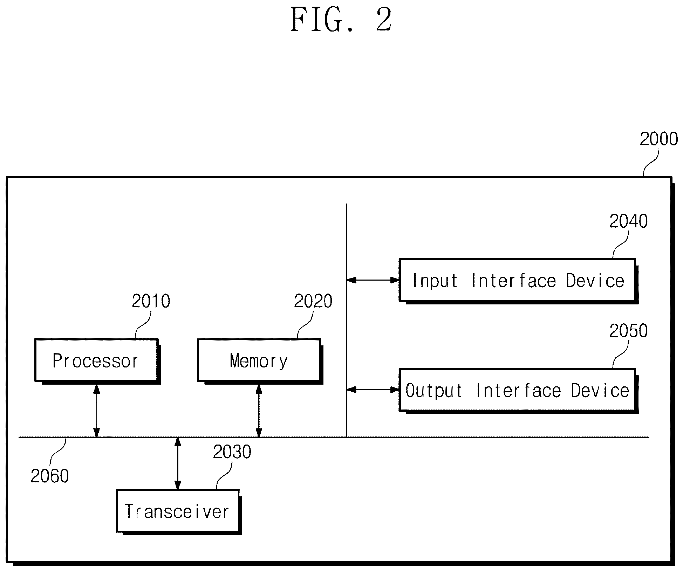

FIG. 2 illustrates an apparatus according to an embodiment of the present disclosure. Referring to FIG. 2, an apparatus 2000 may be used to implement the configuration of the system for supporting decision-making in an environment where multiple users collaborate to manage cultivation, as described with reference to FIG. 1.

For example, the apparatus 2000 may perform functions such as collecting and storing data, refining the collected and stored data, generating datasets, training the datasets by means of an artificial intelligence learning module, deriving learning results regarding input data and output data, generating feedback loop data based on the learning results, and performing deep learning based on the learning results to support decision-making in a smart farm (greenhouse) environment.

The apparatus 2000 may include at least one of a processor 2010, a memory 2020, a transceiver 2030, an input interface device 2040, and an output interface device 2050. Each of these components may be interconnected through a common bus 2060 to perform communication with one another. Alternatively, the components may be connected not through the common bus 2060, but rather through individual interfaces or buses centered on the processor 2010.

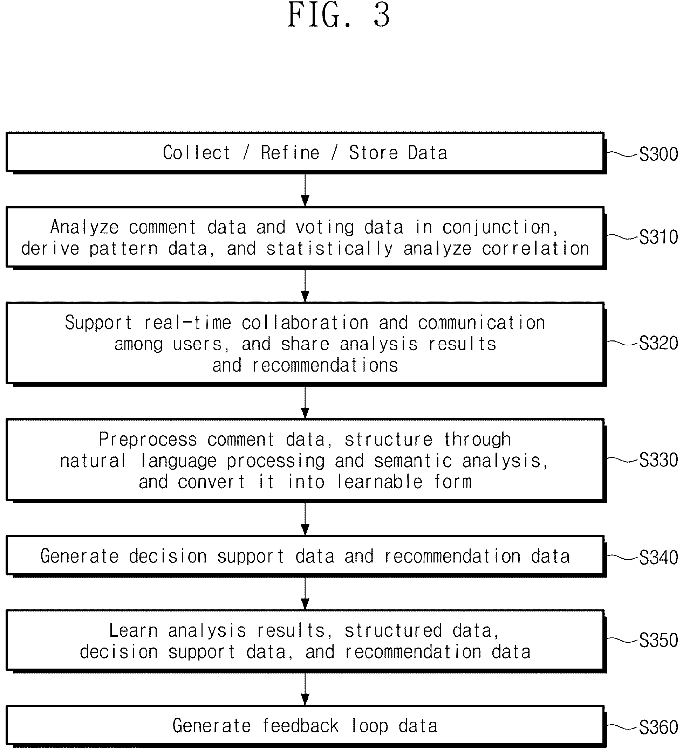

The processor 2010 may be implemented as various types such as an application processor (AP), a central processing unit (CPU), or a graphic processing unit (GPU), and may be any semiconductor device that executes commands stored in the memory 2020. The processor 2010 may execute program commands stored in the memory 2020. The processor 2010 may be configured to implement the system and method for supporting decision-making in an environment where multiple users collaborate to manage cultivation, as described with reference to FIG. 1 and FIG. 3 to be described later.

Additionally or alternatively, the processor 2010 may store program commands for implementing at least one function of the modules in the memory 2020, and control operations to be performed as described with reference to FIG. 1 and FIG. 3 below.

The memory 2020 may include various forms of volatile or nonvolatile storage media. For example, the memory 2020 may include read-only memory (ROM) and random-access memory (RAM). In the embodiments of the present disclosure, the memory 2020 may be located inside or outside the processor 2010, and may be connected to the processor 2010 through various known means.

The transceiver 2030 may transmit and receive data processed or to be processed by the processor 2010 to and from external devices and/or external systems.

The input interface device 2040 may be configured to provide data to the processor 2010.

The output interface device 2050 may be configured to output data from the processor 2010.

According to embodiments of the present disclosure, the system and method for supporting decision-making in an environment where multiple users collaborate to manage cultivation may be implemented by means of artificial intelligence, deep learning, machine learning, generative AI, or an autonomic system.

FIG. 3 illustrates a method for supporting decision-making in an environment where multiple users collaborate to manage cultivation. The method may include steps S300 to S360. The method of FIG. 3 may be performed by the system of FIG. 1, and FIG. 3 will be described in connection with FIG. 1.

In step S300, a data collection and management module 110 may collect, in real time, comment data and voting data generated by users, and may refine and store the collected data.

In step S310, a multi-domain analysis and interaction modeling module 120 may correlate and analyze the comment data and the voting data, derive pattern data in similar situations involving multiple users, and statistically analyze correlations among a specific situation, its impact, and corresponding responses. In one example, the multi-domain analysis and interaction modeling module 120 may include an interaction model, and step S310 may include: statistically analyzing correlations based on the interaction model, and updating the interaction model by integrating the derived pattern data and the analyzed correlation data into the interaction model.

In step S320, a user collaboration interface module 130 may support real-time collaboration and communication among users, and may share analysis results and recommendations.

In step S330, a comment processing and learning module 140 may preprocess comment data, structure the data through natural language processing and semantic analysis, and convert the data into a learnable format. Step S330 may include structuring the comment data by classifying it into a "Situation (S), Impact (I), and Response (R)" structure.

In step S340, a decision support and recommendation generation module 150 may generate decision support data and recommendation data based on the analysis results and the structured data.

In step S350, a learning and feedback management module 160 may learn the analysis results, the structured data, the decision support data, and the recommendation data. Step S350 may be performed based on an artificial intelligence learning model.

In step S360, the learning and feedback management module 160 may generate feedback loop data based on the learning results. The learning and feedback management module 160 may provide the feedback loop data to the multi-domain analysis and interaction modeling module 120. Based on the feedback loop data, the multi-domain analysis and interaction modeling module 120 may correlate and analyze the comment data and the voting data, derive pattern data, statistically analyze correlations among situations, impacts, and responses, and/or update the interaction model.

Based on the above description, an embodiment of the present disclosure relates to a system and method for supporting cultivation management decision-making through collaboration among multiple users (such as growers, consultants, managers, and researchers) in a smart farm (greenhouse) environment. In particular, the system and method may utilize user opinions and comments to expand a data interaction model and broaden the analysis scope of an artificial intelligence model, thereby improving the quality of decision-making.

An embodiment of the present disclosure may implement an integrated decision-making process comprising ① real-time sharing of smart farm (greenhouse) data, ② collection of user comments and opinions (structuring comments and storing them in a database), ③ artificial intelligence analysis and model refinement (reflecting new variables and relationships extracted from comments and training the model), ④ generation of recommendations and support for decision-making; and ⑤ continuous learning and improvement.

The embodiments may be applied to plant cultivation devices, vertical farms, and smart farm (greenhouse) cultivation management support services.

According to one embodiment of the present disclosure, an environment may be provided in which multiple users with diverse expertise and experience participate to resolve complex causal relationships and interactions arising in smart farm (greenhouse) operations. Through such collaboration, complex problems may be solved and the efficiency of smart farm (greenhouse) operations may be enhanced.

In addition, diverse opinions and perspectives exchanged during user collaboration may be reflected in decision-making, thereby improving the reliability and quality of decisions. Such collaboration may increase the accuracy of data-driven decisions and may be effective in solving complex problems.

Furthermore, user comments may be utilized to expand and refine the data interaction model. As a result, the analysis and prediction scope of the artificial intelligence model may be broadened, leading to more precise and meaningful outcomes.

According to one embodiment of the present disclosure, a system may be provided that improves decision-making quality through real-time exchange of user opinions and majority voting processes. This enables optimal decisions to be derived in smart farm (greenhouse) operations and maximizes the effect of user collaboration.

In addition, an embodiment of the present disclosure may continuously expand the analytical scope of the data interaction model by structuring user comments into data. This may generate new causal relationships and responses based on the Situation-Impact-Response (SIR) structure, thereby efficiently resolving complex problems in smart (greenhouse) farm operations.

Moreover, by combining user participation with AI learning, the system may continuously learn and improve its models, thereby providing more sophisticated recommendations. This approach maximizes cooperation between users and AI, contributing to improved efficiency and accuracy of smart farm (greenhouse) operations.

Although embodiments of the present disclosure have been described in detail above, the scope of the present disclosure is not limited thereto, and various modifications and improvements using the basic concept of the disclosure by a person skilled in the art also fall within the scope of the present disclosure.

## Claims

1. A system for supporting decision-making in an environment where multiple users collaborate to manage cultivation, comprising:
a data collection and management module configured to collect, in real time, comment data and voting data generated by users and to refine and store the collected data;
a multi-domain analysis and interaction modeling module configured to correlate and analyze the comment data and the voting data, derive pattern data in similar situations involving multiple users, and statistically analyze correlations among a specific situation, its impact, and corresponding responses;
a user collaboration interface module configured to support real-time collaboration and communication among users and to share analysis results and recommendations;
a comment processing and learning module configured to preprocess the comment data, structure the data through natural language processing and semantic analysis, and transform the data into a learnable format;
a decision support and recommendation generation module configured to generate decision support data and recommendation data based on the analysis results and the structured data; and
a learning and feedback management module configured to learn the analysis results, the structured data, the decision support data, and the recommendation data, generate feedback loop data based on the learning results, and provide the feedback loop data to the multi-domain analysis and interaction modeling module.

2. The system of claim 1, wherein the multi-domain analysis and interaction modeling module includes an interaction model, wherein the correlations are statistically analyzed based on the interaction model, and wherein the interaction model is updated by integrating the derived pattern data and analyzed correlation data into the interaction model.

3. The system of claim 1, wherein the comment processing and learning module structures the comment data by classifying the data into a structure of "Situation, Impact, and Response."

4. The system of claim 1, wherein the learning and feedback management module performs the learning based on an artificial intelligence learning model.

5. A method for supporting decision-making in an environment where multiple users collaborate to manage cultivation, comprising:
collecting, in real time, comment data and voting data generated by users and refining and storing the collected data, by a data collection and management module;
correlating and analyzing the comment data and the voting data, deriving pattern data in similar situations involving multiple users, and statistically analyzing correlations among a specific situation, its impact, and corresponding responses, by a multi-domain analysis and interaction modeling module;
supporting real-time collaboration and communication among users and sharing analysis results and recommendations, by a user collaboration interface module;
preprocessing the comment data, structuring the data through natural language processing and semantic analysis, and transforming the data into a learnable format, by a comment processing and learning module;
generating decision support data and recommendation data based on the analysis results and the structured data, by a decision support and recommendation generation module; and
learning the analysis results, the structured data, the decision support data, and the recommendation data, and generating feedback loop data based on the learning results, by a learning and feedback management module.

6. The method of claim 5, wherein the multi-domain analysis and interaction modeling module includes an interaction model, and wherein correlating and analyzing the comment data and the voting data, deriving pattern data, and statistically analyzing correlations comprise:
statistically analyzing correlations based on the interaction model; and
updating the interaction model by integrating the derived pattern data and analyzed correlation data into the interaction model.

7. The method of claim 5, wherein preprocessing, structuring, and transforming the comment data into a learnable format comprise structuring the comment data by classifying the data into a structure of "Situation, Impact, and Response."

8. The method of claim 5, wherein the step of learning the analysis results, the structured data, the decision support data, and the recommendation data is performed based on an artificial intelligence learning model.
